# EUROPÄISCHE PATENTSCHRIFT

(11) **EP 3 041 694 B1**
(45) Veröffentlichungstag und Bekanntmachung des Hinweises auf die Patenterteilung: **19.05.2021**
(21) Anmeldenummer: 14752608.1
(22) Anmeldetag: 13.08.2014
(51) Int. Cl.: B60H 1/00

(54) **HEIZ-/KÜHLSYSTEM FÜR FAHRZEUGE UND VERFAHREN ZUM BETREIBEN EINES HEIZ-/ KÜHLSYSTEMS FÜR FAHRZEUGE**
HEATING/COOLING SYSTEM FOR VEHICLES AND METHOD FOR OPERATING A HEATING/COOLING SYSTEM FOR VEHICLES
SYSTÈME DE CHAUFFAGE/VENTILATION DE VÉHICULES AUTOMOBILES ET PROCÉDÉ PERMETTANT DE FAIRE FONCTIONNER UN SYSTÈME DE CHAUFFAGE/VENTILATION DE VÉHICULES AUTOMOBILES

(30) Priorität: 04.09.2013 DE 102013109666
(43) Veröffentlichungstag der Anmeldung: 13.07.2016
(73) Patentinhaber: Pierburg GmbH, 41460 Neuss (DE)
(72) Erfinder: HOPP, Martin, 50858 Köln (DE); NAUSE, Fabienne, 74196 Neuenstadt am Kocher (DE); EBERT, Christian, 74722 Buchen (DE); KÖHLER, Matthias, 74177 Bad Friedrichshall (DE)
(74) Vertreter: terpatent Patentanwälte ter Smitten Eberlein-Van Hoof Rütten Daubert
(86) Internationale Anmeldenummer: PCT/EP2014/067354
(87) Internationale Veröffentlichungsnummer: WO 2015/032599

(56) Entgegenhaltungen:
- EP-A1- 2 110 274
- EP-A2- 1 348 920
- US-A1- 2011 284 181
- US-A1- 2012 210 746

## Beschreibung

Die Erfindung betrifft ein Heiz-/Kühlsystem für Fahrzeuge vom Wärmepumpentyp sowie ein Verfahren zum Betreiben eines solchen Heiz-/Kühlsystems.

Derartige Heiz-/Kühlsysteme sind in verschiedenen Ausführungen bekannt, wobei ein Kältemittelkreis als Wärmepumpe und/oder als Kältemaschine betrieben werden kann. Hierzu umfasst der Kältemittelkreis zumindest einen Kompressor, einen Verflüssiger, einen Verdampfer und eine Expansionseinrichtung. Der wesentliche Vorteil eines solchen Heiz-/Kühlsystems liegt in der Möglichkeit einer Verschaltung und Nutzbarmachung der einzelnen Wärmequellen und Wärmesenken eines Fahrzeugs zum Beheizen oder zum Kühlen des Fahrzeuginnenraums.

In Fahrzeugen der neuesten Generation, insbesondere Fahrzeuge mit einem reinen Elektroantrieb oder einem Hybridantrieb, stehen solche Wärmequellen und Wärmesenken jedoch nicht oder nur in geringem Maße für eine Temperierung des Fahrzeuginnenraums zur Verfügung. Dieser bauartbedingte Nachteil kann durch Umgebungseinflüsse weiter verstärkt werden, beispielsweise wenn ein Teil des Heiz-/Kühlsystems aufgrund extrem niedriger Außentemperaturen eingefroren ist und somit dem Heiz-/Kühlsystem nicht zur Verfügung steht. Darüber hinaus ist es bei solchen Fahrzeugen erforderlich, dass nicht nur der Fahrzeuginnenraum, sondern auch verschiedene Fahrzeugaggregate zum Einhalten eines bestimmten Temperaturbereichs beheizt oder gekühlt werden.

Bekannte Heiz-/Kühlsysteme stoßen daher bei Elektro- oder Hybridfahrzeugen, insbesondere bei extrem hohen oder extrem niedrigen Temperaturen, schnell an ihre Grenzen.

Die DE 44 10 057 C2 beschreibt einen Wärmepumpen-Kreislauf, bei dem ein Kältemittel in einem Verdampfer Wärme von einem Luftstrom aufnehmen und in einem Verflüssiger Wärme an einen Luftstrom abgeben kann. Der Wärmepumpen-Kreislauf weist einen Bypass um den Verflüssiger auf, so dass bei sehr niedrigen Außentemperaturen zum Abtauen eines eingefrorenen Verdampfers das Kältemittel als Heißgas von einem Kompressor direkt in den Verdampfer geleitet werden kann. Der Verflüssiger wird hierbei durch den Bypass vollständig überbrückt.

Die WO 2012 075 975 A1 beschreibt eine Heiz-/Kühleinrichtung mit einem Kältemittel-Kreislauf, der über einen Verflüssiger und über einen Verdampfer jeweils mit einem separat ausgebildeten Kühlmittelkreislauf in einem Wärmeaustausch steht. Die Kühlmittelkreisläufe wirken mit weiteren Wärmetauschern des Fahrzeugs zusammen und können für eine optimale Verschaltung der Wärmequellen und Wärmesenken eines Fahrzeuges miteinander verbunden werden.

Die WO 2012 / 084 175 A1 beschreibt eine Klimaanlage für Elektrofahrzeuge mit einem Kältemittelkreis, der zwei luftüberströmte Wärmetauscher aufweist und über einen dritten Wärmetauscher mit einem separaten Fluidkreis koppelbar ist. Der Fluidkreis steht mit einer Wärmequelle des Fahrzeugs, insbesondere einer Batterie, in einem Wärmeaustausch und weist eine Zusatzheizung auf.

Die EP 2 110 274 A1 beschreibt eine Heiz-/Kühleinrichtung für Fahrzeuge mit einem Wärmepumpenkreislauf, bei dem das Kältemittel sowohl in einem Heizbetrieb als auch in einem Kühlbetrieb den Wärmepumpenkreislauf in derselben Richtung durchströmt. Dazu sind neben den an sich bekannten Komponenten eines Wärmepumpenkreislaufs zusätzlich ein innerer Wärmetauscher sowie verschiedene Umgebungsleitungen vorgesehen.

Die EP 1 348 920 A2 beschreibt eine Wärmepumpe zum gleichzeitigen Kühlen und Heizen von Fahrzeugen mit einem Kältemittel-Kreislauf, bei dem drei Wärmetauscher vorgesehen sind, die jeweils als Verflüssiger oder Verdampfer betrieben werden können. Jeder Wärmetauscher weist eine Bypass-Leitung auf, so dass das Kältemittel beispielsweise durch einen ersten oder alternativ durch einen zweiten als Verdampfer wirkenden Wärmetauscher geleitet werden kann.

Die US 2011/0284181 A1 zeigt einen als Wärmepumpe ausgebildeten Kältemittelkreislauf, bei dem die Strömungsrichtung des Kältemittels mittels eines Umschaltventils geändert werden kann. In einer Ausgestaltung kann das Kältemittel wahlweise durch einen ersten oder einen zweiten als Verdampfer wirkenden Wärmetauscher geleitet werden.

Nachteilig an den vorgenannten Systemen ist, dass in einem Abtaubetrieb, beispielsweise zum Abtauen des Verdampfers, an dem Verflüssiger des Kältemittelkreises Wärme, zum Beispiel für die Beheizung eines Fahrzeuginnenraums, nicht bereitgestellt werden kann. Daher ist bei solchen Systemen eine Zusatzheizung erforderlich, die jedoch einen erhöhten Energieverbrauch und dadurch eine geringere Reichweite des Fahrzeugs verursacht.

Aufgabe der vorliegenden Erfindung ist es daher, ein Heiz-/Kühlsystem bereitzustellen, das in Fahrzeugen mit einem Elektromotor und/oder Verbrennungsmotor auch bei extremen Temperaturen eine effiziente und rasche Temperierung des Fahrzeuginnenraums sowie der Fahrzeugaggregate ohne eine separate Zusatzheizung bzw. Zusatzkühlung ermöglicht. Ferner soll ein Verfahren bereitgestellt werden, mit dem ein solches Heiz-/Kühlsystem betrieben werden kann. Die Lösung der Aufgabe erfolgt erfindungsgemäß durch ein Heiz-/Kühlsystem mit den Merkmalen des Anspruchs 1 sowie durch ein Verfahren mit den Merkmalen des Anspruchs 11.

In bekannter Weise umfasst das Heiz-/Kühlsystem für ein Kraftfahrzeug einen Kältemittel-Kreislauf, insbesondere einen als Wärmepumpe und/oder Kältemaschine ausgebildeten Kältemittel-Kreislauf. Der Kältemittel-Kreislauf besteht vorzugsweise aus einer Hauptleitung, die von einem Kältemittel durchströmbar ist und die folgenden Komponenten eines Kältemittel-Kreislaufs miteinander verbindet: zumindest einen Kompressor, einen Verflüssiger bzw. Gaskühler, einen Verdampfer und eine Expansionseinrichtung bzw. ein Expansionsventil. Der Verflüssiger ist mit einem ersten Kühlmittel-Kreislauf und der Verdampfer mit einem zweiten Kühlmittel-Kreislauf koppelbar, so dass das Kältemittel des Kältemittel-Kreislaufs in dem Verflüssiger mit einem ersten Kühlmittel-Kreislauf und in dem Verdampfer mit einem zweiten Kühlmittel-Kreislauf in einem Wärmeaustausch stehen kann. Durch die Anordnung der Kühlmittel-Kreisläufe ist eine Erweiterung bzw. Ausdehnung des Heiz-/Kühlsystems auf sämtliche, auch weit voneinander entfernt liegende Wärmequellen und Wärmesenken eines Fahrzeugs ermöglicht. Dies ist insbesondere gegenüber Kältemittel-Kreisläufen mit luftüberströmten Wärmetauschern vorteilhaft. Somit können sämtliche in einem Fahrzeug angeordnete Wärmequellen und Wärmesenken in das Heiz-/Kühlsystem integriert bzw. thermisch miteinander vernetzt werden. Die einzelnen Kühlmittel-Kreisläufe können separat und/oder untereinander verbindbar ausgebildet sein, so dass sich weitere Verschaltungsmöglichkeiten ergeben. Ferner ermöglicht diese Anordnung, dass je nach Bedarf das Kältemittel entweder von einem ersten Kühlmittel-Kreislauf erwärmt und von dem zweiten Kühlmittel-Kreislauf gekühlt wird oder von beiden Kühlmittel-Kreisläufen gleichzeitig erwärmt bzw. gekühlt wird. Somit ist eine intensive und rasche Erwärmung bzw. Kühlung des Kältemittels möglich. Darüber hinaus ist vor dem Hintergrund der hohen Preise für Kältemittel ein weiterer Vorteil, dass die Kältemittelmenge relativ gering gehalten werden kann. Ferner kann die Anzahl der Problemstellen eines Kältemittel-Kreislaufs minimiert werden, insbesondere kann die Anzahl möglicher Leckagestellen verringert und Hochdruckbereiche verkleinert werden. Ferner weist der Kältemittel-Kreislauf einen inneren Kältemittel-Wärmetauscher auf, der beidseitig mit dem Kältemittel des Kältemittel-Kreislaufs gekoppelt ist. Der innere Kältemittel-Wärmetauscher ist in dem Kältemittel-Kreislauf hochdruckseitig bevorzugt zwischen dem Verflüssiger und dem Verdampfer und niederdruckseitig zwischen einem Sammelbehälter und dem Kompressor angeordnet. Dadurch kann der Kältemittel-Kreislauf zusätzlich in eine selbstverstärkende Verschaltung gebracht werden, in der das Kältemittel in einem bestimmten Bereich des Kältemittel-Kreislaufs, nämlich im Wärmepumpenbetrieb stromabwärts des Verflüssigers und im Kälteanlagenbetrieb stromabwärts des Verdampfers, Wärme an das Kältemittel in einem anderen Bereich des Kältemittel-Kreislaufs übertragen kann, nämlich im Wärmepumpenbetrieb an das Kältemittel stromabwärts des Verdampfers und im Kälteanlagenbetrieb stromabwärts des Verflüssigers.

Erfindungsgemäß weist der Kältemittel-Kreislauf ein Umschaltventil, insbesondere ein Vier-Wege-Ventil, zur Umkehrung der Strömungsrichtung in dem Kältemittel-Kreislauf auf. Das Umschaltventil weist vorzugsweise zwei Eingänge und zwei Ausgänge auf. Dadurch kann das Umschaltventil zum Einen den Kältemittelstrom stromabwärts des Kompressors entweder in einem Wärmepumpenbetrieb, insbesondere Extrem-Heizbetrieb, zu dem Verflüssiger oder alternativ in einem Kälteanlagenbetrieb zu dem Verdampfer leiten und zum Anderen entweder in einem Wärmepumpenbetrieb den Kältemittelstrom stromabwärts des Verdampfers bzw. stromabwärts der Umgehungsleitung zu einem Sammelbehälter oder in einem Kälteanlagenbetrieb den Kältemittelstrom stromaufwärts des Verdampfers zu einem Sammelbehälter leiten. Dadurch ist der Kältemittel-Kreislauf zu einer Wärmepumpe oder zu einer Kälteanlage schaltbar. In einem Wärmepumpenbetrieb nimmt das Kältemittel in dem Verdampfer Wärme von dem zweiten Kühlmittel-Kreislauf auf und gibt in dem Verflüssiger Wärme an den ersten Kühlmittel-Kreislauf ab. In einem Kühlbetrieb sind die Strömungsrichtung des Kältemittels in dem Kältemittel-Kreislauf sowie die Funktionsweise der Wärmetauscher, insbesondere des Verflüssigers und des Verdampfers, umgekehrt. So wird der Verdampfer als ein Verflüssiger und der Verflüssiger als ein Verdampfer betrieben. Dadurch nimmt das Kältemittel in dem ehemals als Verflüssiger und nun als Verdampfer wirkenden Wärmetauscher Wärme von dem ersten Kühlmittel-Kreislauf auf und gibt in dem ehemals als Verdampfer und nun als Verflüssiger betriebenen Wärmetauscher Wärme an den zweiten Kühlmittel-Kreislauf ab.

Ferner ist erfindungsgemäß der Verdampfer des Kältemittel-Kreislaufs von dem Kältemittel umgehbar. Dadurch kann der Verdampfer in dem Kältemittel-Kreislauf vollständig überbrückt werden und folglich die Wärmeübertragung in dem Verdampfer funktionslos geschaltet werden.

Diese Anordnung hat den Vorteil, dass bei sehr niedrigen Außentemperaturen, insbesondere Temperaturen niedriger als -5 °C, der Kältemittelstrom des Kältemittel-Kreislaufs in eine "Kurzkreis-Schaltung" gebracht werden kann, in der das Kältemittel fortwährend den Kompressor und den Verflüssiger durchströmt, nicht aber den Verdampfer. Dadurch erfolgt in dem Verdampfer keine Wärmeübertragung von dem Kühlmittel zumindest des zweiten Kühlmittel-Kreislauf auf das Kältemittel oder umgekehrt. Vorzugsweise kann das Kältemittel in dem Kompressor stetig Wärme aufnehmen, insbesondere von dem elektrischen Antrieb des Kompressors. Die von dem Kältemittel aufgenommene Wärme kann in dem Verflüssiger an den ersten Kühlmittel-Kreislauf abgegeben werden. Das Kühlmittel des ersten Kühlmittel-Kreislaufs kann somit bis zu einer bestimmten Höchsttemperatur erwärmt werden. Das abgekühlte Kältemittel wird wiederum direkt zu dem Kompressor geleitet, in dem das Kältemittel wieder erwärmt wird. Durch diese "Kurzkreis-Schaltung" kann eine ausreichend hohe Temperatur beispielsweise zur (Vor-)Beheizung des Fahrzeuginnenraums oder eines Fahrzeugaggregats bereitgestellt werden, unabhängig von dem zweiten Kühlmittelstrom.

Ein weiterer Vorteil ist die Möglichkeit einer vollständigen Abkopplung des zweiten Kühlmittel-Kreislaufs von dem Kältemittel-Kreislauf. Dabei kann der zweite Kühlmittel-Kreislauf bei sehr niedrigen Außentemperaturen vollständig funktionslos geschaltet werden. Dies ist besonders vorteilhaft, wenn der zweite Kühlmittel-Kreislauf mit einem Wärmetauscher in Verbindung steht, der aufgrund der sehr niedrigen Temperaturen nicht funktionsfähig bzw. eingefroren ist. Beispielsweise kann das Kühlmittel des zweiten Kühlmittel-Kreislaufs in einem Aggregat-Wärmetauscher, beispielsweise einer Batterie, Wärme aufnehmen und in einem vereisten Umgebungs-Wärmetauscher abgeben. Dadurch kann der zweite Kühlmittel-Kreislauf als ein eigenständiger bzw. separat ausgebildeter Heiz-Kreislauf betrieben werden. Ferner kann der Kältemittel-Kreislauf zur Energieeinsparung durch die Abkopplung des zweiten Kühlmittel-Kreislaufs bei Bedarf von dem Kältemittel-Kreislauf vollständig funktionslos geschaltet werden.

Vorzugsweise weist der Kältemittel-Kreislauf eine Umgehungsleitung zur Umgehung des Verdampfers auf. Dadurch kann der Verdampfer und ein Teil der Hauptleitung des Kältemittel-Kreislaufs überbrückt werden. Das Kältemittel des Kältemittel-Kreislaufs kann hierbei an dem Verdampfer und dem Teil der Hauptleitung parallel vorbei geleitet werden. Die Umgehungsleitung kann zwischen einer zu dem Verdampfer hin führenden Leitung und einer von dem Verdampfer weg führenden Leitung angeordnet sein, insbesondere zweigt die Umgehungsleitung an einer Zuströmseite des Verdampfers von der Hauptleitung ab und mündet an einer Abströmseite des Verdampfers in die Hauptleitung. Folglich kann der Kältemittelstrom stromaufwärts des Verdampfers von der Hauptleitung in die Umgehungsleitung abgezweigt und stromabwärts des Verdampfers wieder in die Hauptleitung geleitet werden, ohne den Verdampfer zu durchströmen.

Der Kältemittel-Kreislauf kann ein Steuerventil zum selektiven Lenken des Kältemittelstroms zu der Umgehungsleitung und/oder zu dem Verdampfer aufweisen. Das Steuerventil kann innerhalb der Umgehungsleitung und/oder in der Eingangsleitung des Verdampfers und/oder Ausgangsleitung des Verdampfers angeordnet sein. Bevorzugt ist das Steuerventil in der stromaufwärts des Verdampfers befindlichen Eingangsleitung des Verdampfers angeordnet. Das Steuerventil ist als ein Abzweigventil mit einer Sperrfunktion ausgebildet, beispielsweise ein Drei-Zwei-Wege-Ventil oder eine Kombination aus zwei Zwei-WegeVentilen. Es bleibt dabei dem Fachmann überlassen, durch Kombination verschiedener Ventile den Kältemittelstrom entweder durch den Verdampfer oder durch die Umgehungsleitung zu leiten. Das Steuerventil kann auch geeignet sein, den Kältemittelstrom zu einem Teil in die Umgehungsleitung und zu einem anderen Teil in den Verdampfer zu leiten. Dadurch kann die "Kurzkreis-Schaltung" des Kältemittelstroms je nach Bedarf stufenlos zugeschaltet werden.

In einer vorteilhaften Ausgestaltung weist der Kältemittel-Kreislauf einen Motor-Wärmetauscher auf, insbesondere einen Wärmetauscher des Kompressormotors. Der Motor-Wärmetauscher kann hochdruckseitig oder niederdruckseitig angeordnet sein, vorzugsweise befindet sich der Motor-Wärmetauscher niederdruckseitig innerhalb des Kompressorgehäuses unmittelbar an dem Kompressormotor. Dadurch kann die an dem Motor des Kompressors, insbesondere einem Elektromotor, entstehende Abwärme unmittelbar an den Kältemittelstrom abgegeben werden, sobald der Kompressor eingeschaltet ist, das heißt sobald der Kältemittel-Kreislauf aktiviert ist. Dadurch ist eine dauerhafte Wärmeübertragung von dem Kompressormotor zu dem Kältemittel möglich. Eine zusätzliche Beheizung des Kältemittels ist nicht erforderlich. Das Kältemittel kann dadurch auch bei extrem niedrigen Außentemperaturen und einer daraus resultierenden nicht effektiven Wärmeübertragung an dem Verdampfer ausreichend erwärmt werden. Gleichzeitig wird der Kompressormotor auf diese Weise gekühlt. Alternativ kann der elektromotorisch angetriebene Kompressor in bekannter Art und Weise saugdampfgekühlt ausgeführt sein.

Vorzugsweise weist der Kältemittel-Kreislauf eine Drossel auf, die stufenlos verstellbar ist. Die Drossel ist bevorzugt in der Hauptleitung stromaufwärts des Verdampfers vor der Abzweigung in die Umgehungsleitung angeordnet, insbesondere kann die Drossel zwischen einem inneren Wärmetauscher des Kältemittel-Kreislaufs und einem Abzweigventil der Umgehungsleitung angeordnet sein. Der Motor-Wärmetauscher kann auch der Elektromotor des Kompressors selbst sein. Vorzugsweise ist eine einzige Drossel der Umgehungsleitung des Verdampfers wie auch dem Verdampfer selbst zuordenbar, wodurch sowohl eine Regelung der Betriebsdrücke im Kühlbetrieb als auch im Extrem-Heizbetrieb realisiert wird (z. B. Hochdruck, Niederdruck im Bypassbetrieb). Alternativ kann eine weitere Drossel auch innerhalb der Umgehungsleitung angeordnet sein. Dadurch kann der in der Umgehungsleitung vorherrschende Druck des Kältemittels mittels der Drossel eigenständig stufenlos eingestellt werden. Die Drossel kann in Bezug auf Drosselquerschnitt und/oder Öffnungszeit variabel ausgebildet sein. Dadurch sind die Betriebsdrücke durch Variation des Öffnungsquerschnitts der Drossel bzw. Öffnungszeit der Drossel derart einstellbar, dass die größtmögliche Effizienz des Kältemittelkreises in allen Betriebszuständen sichergestellt ist.

An einer Eingangsseite des inneren Kältemittel-Wärmetauschers und an einer Ausgangsseite des inneren Kältemittel-Wärmetauschers ist vorzugsweise jeweils ein Temperatursensor zur Messung der Temperatur des in den bzw. aus dem inneren Kältemittel-Wärmetauscher strömenden Kältemittels angeordnet. Dadurch kann eine Temperaturdifferenz zwischen dem in den Kältemittel-Wärmetauscher einströmenden und dem aus dem Kältemittel-Wärmetauscher ausströmenden Kältemittel erfasst werden. Die Temperaturdifferenz kann für die Regelung des Kompressors und/oder des Steuerventils zum Leiten des Kältemittelstroms durch die Umgehungsleitung und/oder durch den Verdampfer genutzt werden. Somit kann insbesondere eine Überhitzung des durch die Umgehungsleitung geleiteten Kältemittels am Eintritt in den Kompressor sichergestellt werden. Alternativ kann eine Regelung der Temperaturdifferenz niederdruckseitig über den inneren Wärmetauscher durch den in den Verflüssiger geleiteten Kühlmittelvolumenstroms des ersten Kühlmittel-Kreislaufs mittels der Kühlmittel-Pumpe des ersten Kühlmittelkreises erfolgen.

In einer Ausgestaltung weist der Kältemittel-Kreislauf einen Sammelbehälter auf, der als ein Speicher, insbesondere als ein PufferSpeicher, ausgebildet sein kann. Der Sammelbehälter ist vorzugsweise stromabwärts des Verdampfers zwischen einem Umschaltventil und einem inneren Wärmetauscher des Kältemittel-Kreislaufs angeordnet.

Vorzugsweise weisen der erste Kühlmittel-Kreislauf und/oder der zweite Kühlmittel-Kreislauf jeweils einen Fahrzeug-Innenraum-Wärmetauscher auf. Der Innenraum-Wärmetauscher des ersten und/oder zweiten Kühlmittel-Kreislaufs ist über den Verflüssiger und/oder den Verdampfer mit dem Kältemittel-Kreislauf thermisch koppelbar. Der Innenraum-Wärmetauscher wird vorzugsweise von in den Fahrzeuginnenraum strömender Frischluft überströmt, so dass die überströmende Frischluft mittels eines oder mittels beider Innenraum-Wärmetauscher beheizt oder gekühlt werden kann. Alternativ kann anstatt Frischluft teilweise oder vollständig Luft des Fahrzeuginnenraums durch Rezirkulation (Umluftbetrieb) mittels Innenraumwärmetauscher geheizt oder gekühlt werden, woraus sich eine Reduktion der für die Klimatisierung ergebenden Leistungsaufnahme ergibt. Die Innenraum-Wärmetauscher sind bevorzugt in Reihe geschaltet, so dass ein verstärkender Effekt hinsichtlich der Temperierung möglich ist. Vorzugsweise sind die Innenraum-Wärmetauscher jeweils über eine Zuleitung und eine stufenlos einstellbare Ventileinrichtung mit dem entsprechenden Kühlmittel-Kreislauf koppelbar, so dass der Kühlmittelstrom den Innenraum-Wärmetauscher nur bei Bedarf durchströmt. Bei sehr niedrigen Temperaturen und der erfindungsgemäßen Verschaltung des Kältemittelstroms in die Umgehungsleitung kann der Innenraum-Wärmetauscher allein auf den ersten Kühlmittel-Kreislauf geschaltet sein. Dabei nimmt das Kühlmittel des ersten Kühlmittel-Kreislaufs in dem Verflüssiger des Kältemittel-Kreislaufs und/oder in einem Aggregat-Wärmetauscher Wärme auf, die in dem Innenraum-Wärmetauscher zur Beheizung des Fahrzeuginnenraums abgegeben wird. Sobald der zweite Kühlmittel-Kreislauf, beispielsweise infolge entstehender Abwärme im Fahrbetrieb, zur Wärmeübertragung für eine Beheizung des Fahrzeuginnenraums betriebsbereit ist, kann auch der zweite Kühlmittel-Kreislauf für eine Wärmeübertragung mit dem Heiz-/Kühlmodul thermisch über den Verdampfer kommunizieren und aufgenommene Abwärme über den Verdampfer an das Kältemittel sukzessive abgeben. Die Umgehung des Verdampfers kältemittelseitig kann dabei vollständig oder teilweise geschlossen werden.

Der erste Kühlmittel-Kreislauf und/oder der zweite Kühlmittel-Kreislauf können zumindest einen Aggregat-Wärmetauscher aufweisen. Der Aggregat-Wärmetauscher des ersten und/oder zweiten Kühlmittel-Kreislaufs ist über den Verflüssiger und/oder den Verdampfer mit dem Kältemittel-Kreislauf thermisch koppelbar. Unter einem Aggregat-Wärmetauscher ist ein Wärmetauscher eines jeden Fahrzeugaggregats, beispielsweise eines Verbrennungsmotors, eines Elektromotors, eines Generators, einer Batterie oder einer Bremsanlage des Fahrzeuges, zu verstehen. Ein Aggregat kann dabei der Antriebsmotor des Fahrzeuges und/oder ein Motor eines Fahrzeugaggregats sein. Ferner kann das Aggregat eine Zusatzheizung, beispielsweise ein PTC-Heizer sein. Vorzugsweise stehen sämtliche Aggregate eines Fahrzeuges für einen Wärmeaustausch mit dem Heiz-/Kühlsystem in Verbindung. Dadurch kann der jeweilige Kühlmittelstrom über den Aggregat-Wärmetauscher Wärme von dem Aggregat aufnehmen und/oder an das Aggregat abgeben. Vorzugsweise ist der Aggregat-Wärmetauscher über eine Zuleitung und eine stufenlos einstellbare Ventileinrichtung mit dem Kühlmittel-Kreislauf koppelbar, so dass der Kühlmittelstrom nur bei Bedarf in den jeweiligen Aggregat-Wärmetauscher geleitet wird. Dadurch kann das Aggregat mittels des jeweiligen Kühlmittel-Kreislaufs auch temporär gekühlt oder beheizt werden, so dass das jeweilige Aggregat in einen optimalen Betriebstemperaturbereich gehalten werden kann. Für eine Kühlung beispielsweise der Batterie nimmt vorzugsweise das Kühlmittel des zweiten Kühlmittel-Kreislaufs beim Durchströmen des Batterie-Wärmetauschers von der Batterie Wärme auf und gibt die Wärme in dem Verdampfer an den Kältemittel-Kreislauf ab. Der Kältemittel-Kreislauf ist hierbei zu dem Verdampfer geleitet, so dass der Kältemittel-Kreislauf Wärme von dem zweiten Kühlmittel-Kreislauf aufnehmen kann. Alternativ kann für eine Erwärmung des Fahrzeuginnenraums der Kältemittelstrom durch die Kältemittel-Umgehungsleitung geleitet sein, so dass der Verdampfer von dem Kältemittel nicht durchströmt wird. In dieser Schaltung steht der zweite Kühlmittel-Kreislauf mit dem Kältemittel-Kreislauf nicht in einem Wärmeaustausch und wird daher von dem Kältemittel-Kreislauf auch nicht gekühlt. Das von einem Aggregat, beispielsweise einer Batterie erwärmte Kühlmittel des zweiten Kühlmittel-Kreislaufs kann bei sehr niedrigen Temperaturen Wärme für eine Enteisung eines Umgebungs-Wärmetauschers bereitstellen. Der Kältemittel-Kreislauf kann dabei funktionslos geschaltet sein oder im Extrem-Heizbetrieb unter kältemittelseitiger Umgehung des Verdampfers betrieben werden.

Vorzugsweise weisen der erste Kühlmittel-Kreislauf und/oder der zweite Kühlmittel-Kreislauf einen Umgebungs-Wärmetauscher auf. Der Umgebungs-Wärmetauscher des ersten und/oder zweiten Kühlmittel-Kreislaufs ist über den Verflüssiger und/oder den Verdampfer mit dem Kältemittel-Kreislauf thermisch koppelbar. Der Umgebungs-Wärmetauscher kann als ein bekannter Frontend-Wärmetauscher eines Fahrzeuges ausgebildet sein, so dass der jeweilige Kühlmittel-Kreislauf in vorteilhafter Weise Wärme an die Umgebung abgeben oder von der Umgebung aufnehmen kann. Zusätzlich kann der Kühlmittel-Kreislauf eine separat ausgebildete Kühlungseinrichtung aufweisen, beispielsweise einen Ventilator. Vorzugsweise ist die Kühlungseinrichtung ebenfalls an einem Frontend des Fahrzeugs angeordnet. Dadurch kann das Kühlmittel zur Kühlung des Motors Wärme von dem Motor aufnehmen und in dem Umgebungs-Wärmetauscher an die Umgebung oder über den Innenraum-Wärmetauscher an den Innenraum abgeben. Vorzugsweise ist der Umgebungs-Wärmetauscher über eine Zuleitung und eine stufenlos einstellbare Ventileinrichtung mit dem Kühlmittel-Kreislauf koppelbar, so dass der Kühlmittelstrom nur bei Bedarf in den Umgebungs-Wärmetauscher geleitet wird. In einer weiteren bevorzugten Ausführung ist die Kühlungseinrichtung leistungsregelbar.

In einer Ausgestaltung sind der erste Kühlmittel-Kreislauf und der zweite Kühlmittel-Kreislauf zu einem Gesamt-Kühlmittel-Kreislauf verschaltet. Dadurch kann eine optimale Verschaltung der Wärmequellen und Wärmesenken eines Fahrzeugs erfolgen. Ferner ist für den Kühlmittelstrom lediglich ein Kühlmittel-Pumpe erforderlich.

Erfindungsgemäß ist in einem Verfahren zum Betreiben eines Heiz-/Kühlsystems vorgesehen, dass in einem Normal-Heizmodus das Steuerventil in eine erste Schaltposition geschaltet wird, so dass der Kältemittelstrom in der Reihenfolge durch den Kompressor, den Verflüssiger, die Expansionseinrichtung, insbesondere ein Rückschlagventil und eine Drossel, und den Verdampfer befördert wird. In einem Extrem-Heizmodus wird das Steuerventil in eine zweite Schaltposition geschaltet, so dass der Kältemittelstrom in der Reihenfolge durch den Kompressor, den Verflüssiger, die Expansionseinrichtung und die Umgehungsleitung befördert wird, so dass der Kältemittelstrom den Verdampfer umgeht. Der Kältemittelstrom wird insbesondere von der Eingangsseite des Verdampfers zu der Ausgangsseite des Verdampfers befördert, ohne den Verdampfer zu durchströmen. Dabei nimmt der Kältemittelstrom in dem Extrem-Heizmodus vorzugsweise allein von dem Kompressor, insbesondere dem Kompressormotor, Wärme auf und gibt die Wärme über den Verflüssiger an den ersten Kühlmittel-Kreislauf ab. Der zweite Kühlmittel-Kreislauf kann hierbei funktionslos geschaltet sein.

Erfindungsgemäß ist zusätzlich vorgesehen, dass in einem Normal-Heizmodus ein Umschaltventil in eine erste Schaltposition geschaltet wird, so dass der Kältemittelstrom von dem Kompressor durch das Umschaltventil zu dem Verflüssiger und ein Gegenstrom des Kältemittels von dem Verdampfer durch das Umschaltventil zu dem Kompressor befördert werden. In einem Extrem-Heizmodus wird das Umschaltventil ebenfalls in die erste Schaltposition geschaltet, so dass der Kältemittelstrom hierbei von dem Kompressor durch das Umschaltventil zu dem Verflüssiger und ein Gegenstrom des Kältemittels von der Umgehungsleitung durch das Umschaltventil zu dem Kompressor befördert werden. In einem zusätzlichen Kühlmodus wird das Umschaltventil in eine zweite Schaltposition geschaltet, so dass der Kältemittelstrom in der Reihenfolge durch den Kompressor, das Umschaltventil, den Verdampfer, die Expansionseinrichtung, insbesondere ein Rückschlagventil und eine Drossel, den Verflüssiger und erneut durch das Umschaltventil zu dem Kompressor befördert wird.

Erfindungsgemäß ist zusätzlich vorgesehen, dass dem Kältemittelkreislauf ein innerer Kältemittel-Wärmetauscher zugeordnet wird. Dadurch kann in dem Kältemittel-Wärmetauscher in dem Normal-Heizmodus der von dem Verflüssiger zu dem Verdampfer strömende . Kältemittelstrom Wärme an den von dem Verdampfer zu dem Kompressor strömenden Kältemittelstrom abgeben, in dem Extrem-Heizmodus der von dem Verflüssiger zu dem Verdampfer strömende Kältemittelstrom Wärme an den von der Umgehungsleitung zu dem Kompressor strömenden Kältemittelstrom abgeben, und in dem Kühlmodus der von dem Verdampfer zu dem Verflüssiger strömenden Kältemittelstrom Wärme an den von dem Verflüssiger zu dem Kompressor strömende Kältemittelstrom abgeben.

Gemäß einer weiteren vorteilhaften Weiterentwicklung des Verfahrens zum Betreiben eines Heiz-/Kühlsystems ist zusätzlich vorgesehen, dass dem Kältemittelkreislauf ein Sammelbehälter zugeordnet wird, so dass in dem Normal-Heizmodus der von dem Verdampfer zu dem Kompressor strömende Kältemittelstrom in dem Sammelbehälter zwischengespeichert wird, in dem Extrem-Heizmodus der von der Umgehungsleitung zu dem Kompressor strömende Kältemittelstrom in dem Sammelbehälter zwischengespeichert wird, und in dem Kühlmodus der von dem Verflüssiger zu dem Kompressor strömende Kältemittelstrom in dem Sammelbehälter zwischengespeichert wird.

In den Figuren sind Ausführungsbeispiele des erfindungsgemäßen Heiz-/Kühlsystems dargestellt und nachfolgend beschrieben:
Figur 1 zeigt einen Kältemittel-Kreislauf in einem Normal-Heizbetrieb,
Figur 2 zeigt einen Kältemittel-Kreislauf in einem Extrem-Heizbetrieb,
Figur 3 zeigt eine alternative Ausgestaltung des Kältemittel-Kreislaufs in dem Extrem-Heizbetrieb,
Figur 4 zeigt einen Kältemittel-Kreislauf in einem Kühlbetrieb, und
Figur 5 zeigt eine Ausgestaltung eines Kühlmittel-Kreislaufs.

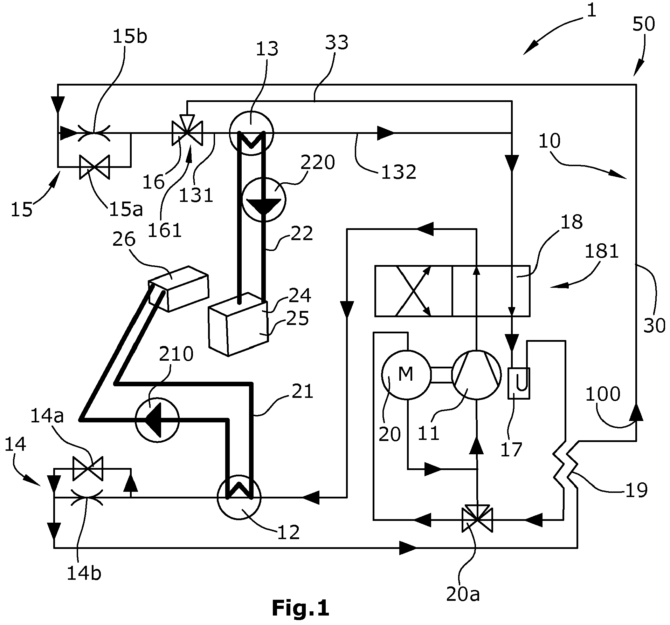

In den Figuren 1 bis 4 ist jeweils ein Kältemittel-Kreislauf 10 des Heiz-/Kühlsystems 1 zum Temperieren eines nicht dargestellten Fahrzeuginnenraums und/oder der nicht näher dargestellten Fahrzeugaggregate gezeigt. Unter Temperieren ist dabei ein Beheizen und/oder Kühlen zu verstehen. Die Steuerung bzw. Regelung des Kältemittel-Kreislaufs 10 sowie der Kühlmittel-Kreisläufe 21, 22 erfolgt über ein nicht dargestelltes Steuergerät mit dazugehörigen Sensoren, Aktuatoren und elektrischen Anschlüssen.

Der Kältemittel-Kreislauf 10 ist von einem Kältemittel 100 durchströmbar und umfasst insbesondere einen Kompressor 11, ein Umschaltventil 18 zur Umkehrung der Strömungsrichtung des Kältemittels 100, einen Verflüssiger 12 und einen Verdampfer 13. Der Kompressor 11 weist einen Kompressor-Antriebsmotor M mit einem Motor-Wärmetauscher 20 auf. Über den Motor-Wärmetauscher 20 kann Abwärme des Motors M an den Kältemittelstrom 100 abgegeben werden. Dazu ist der Motor-Wärmetauscher 20 von dem Kältemittel 100 durchströmbar und kann über ein Ventil 20a dem Kältemittel-Kreislauf 10 zugeordnet werden. Zur Druckregulierung des Kältemittel-Kreislaufs 10 sind Expansionseinrichtungen 14, 15 vorgesehen. Die Expansionseinrichtung 14, 15 ist vorliegend als zumindest eine Drossel 14b, 15b, 15d mit einem parallel geschalteten Rückschlagventil 14a, 15a, 15c ausgebildet. Ferner ist ein innerer Kältemittel-Wärmetauscher 19 vorgesehen, der mit einer ersten Durchströmseite stromabwärts des Verflüssigers 12 zwischen den zwei Expansionseinrichtungen 14, 15 und mit einer zweiten Durchströmseite stromabwärts des Verdampfers 13 zwischen einem Sammelbehälter 17 und dem Kompressor 11 in dem Kältemittel-Kreislauf 10 angeordnet ist.

Ein erster Kühlmittel-Kreislauf 21 ist von einem ersten Kühlmittelstrom 210 durchströmbar und steht über den Verflüssiger 12 mit dem Kältemittel-Kreislauf 10 in einem Wärmeaustausch. Dazu wird der Verflüssiger 12 sowohl von dem Kältemittel 100 als auch von dem Kühlmittel 210 durchströmt. Der erste Kühlmittel-Kreislauf 21 dient zum Temperieren des Fahrzeuginnenraums. Dazu weist der erste Kühlmittel-Kreislauf 21 einen Innenraum-Wärmetauscher 26 auf.

Ein zweiter Kühlmittel-Kreislauf 22 ist von einem zweiten Kühlmittelstrom 220 durchströmbar und steht über den Verdampfer 13 mit dem Kältemittel-Kreislauf 10 in einem Wärmeaustausch. Dazu wird der Verdampfer 13 sowohl von dem Kältemittel 100 als auch von dem Kühlmittel 220 durchströmt. Der zweite Kühlmittel-Kreislauf 22 dient zum Temperieren zumindest eines Fahrzeugaggregats. Dazu weist der zweite Kühlmittel-Kreislauf 22 zumindest einen Aggregat-Wärmetauscher 24 auf. Zudem ist in dem zweiten Kühlmittel-Kreislauf 22 ein nicht näher dargestellter Umgebungs-Wärmetauscher 25 angeordnet, über den der Kühlmittelstrom 220 Wärme aufnehmen oder abgeben kann..

In der Figur 1 ist der Kältemittel-Kreislauf 10 in einem Normal-Heizbetrieb gezeigt. Der Normal-Heizbetrieb ist für eine normale bzw. nicht-übermäßige Temperierung des Fahrzeuginnenraums insbesondere bei Umgebungstemperaturen von -5°C bis +20°C vorgesehen.

In dem Normal-Heizbetrieb wird der Kältemittel-Kreislauf 10 als Wärmepumpe 50 in der bekannten Weise betrieben. Dazu wird das Kältemittel 100 von der Hochdruckseite des Kompressors 11 über das Umschaltventil 18, das in eine erste Schaltposition 181 geschaltet ist, zu dem Verflüssiger 12 befördert. In dem Verflüssiger 12 kann das Kältemittel 100 Wärme an den ersten Kühlmittel-Kreislauf 21 abgeben. Die von dem ersten Kühlmittel 210 aufgenommene Wärme wird zu dem Innenraum-Wärmetauscher 26 befördert und kann dort an eine Luftströmung in den Fahrzeuginnenraum abgegeben werden.

Das über den Verflüssiger 12 abgekühlte Kältemittel 100 wird über das Rückschlagventil 14a der Expansionseinrichtung 14 zu dem inneren Wärmetauscher 19 befördert, über den das Kältemittel 100 weitere Wärme an einen Gegenstrom des Kältemittels 100 abgeben kann. Anschließend wird das Kältemittel 100 zu der Drossel 15b der Expansionseinrichtung 15 befördert, die eine Druckminderung des Kältemittels 100 bewirkt. Stromabwärts der Drossel 15b gelangt das Kältemittel 100 zu dem Steuerventil 16, das in eine erste Schaltposition 161 geschaltet ist, um das Kältemittel 100 zu dem Verdampfer 13 zu leiten. In dem Verdampfer 13 kann das Kältemittel 100 Wärme von dem zweiten Kühlmittel-Kreislauf 22 aufnehmen. Die benötigte Wärme des zweiten Kühlmittelstroms 220 kann beispielsweise über den Aggregat-Wärmetauscher 24 bereitgestellt werden.

Das in dem Verdampfer 13 erwärmte Kältemittel 100 gelangt sodann über das Umschaltventil 18 in einen Sammelbehälter 17, in dem das Kältemittel 100 für eine gewisse Zeit gespeichert werden kann. Aus dem Sammelbehälter 17 kann das zwischengespeicherte Kältemittel 100 wiederum heraus gefördert werden und über den sich anschließenden inneren Wärmetauscher 19 Wärme von dem Kältemittel-Gegenstrom aufnehmen. Das Kältemittel 100 wird sodann über ein Ventil 20a zu dem Motor-Wärmetauscher 20 geleitet sein, über den das Kältemittel 100 weitere Wärme aufnehmen kann. Durch den Kompressor 11 wird das Kältemittel 100 wieder der Hochdruckseite des Kompressors zugeführt.

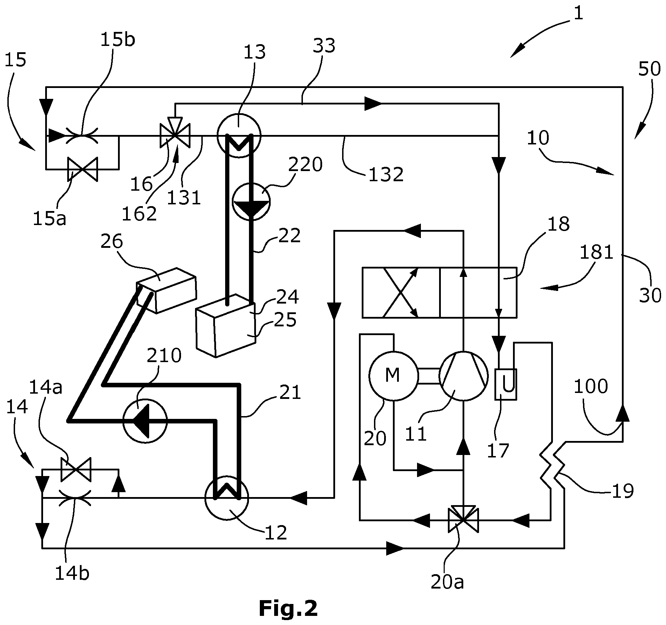

In der Figur 2 ist der Kältemittel-Kreislauf 10 des Heiz-/Kühlsystems 1 in einem Extrem-Heizbetrieb gezeigt. Der Extrem-Heizbetrieb ist für eine energiesparende Temperierung des Fahrzeuginnenraums bei Umgebungstemperaturen von -5°C bis +20°C oder für eine normale Temperierung des Fahrzeuginnenraums insbesondere bei extrem niedrigen Umgebungstemperaturen unterhalb -5°C vorgesehen.

In dem Extrem-Heizbetrieb wird der Kältemittel-Kreislauf 10 als Wärmepumpe 50 betrieben, jedoch wird das Kältemittel 100 nicht durch den Verdampfer 13, sondern durch eine Umgehungsleitung 33 zur Umgehung des Verdampfers 13 befördert. Hierzu ist das Steuerventil 16 in eine zweite Schaltposition 162 geschaltet, in der das Steuerventil 16 den Kältemittelstrom 100 in die Umgehungsleitung 33 leitet. Der Kältemittel-Kreislauf 10 umfasst somit in dem Extrem-Heizbetrieb als wärmeaustauschende Komponenten lediglich den Kompressor 11 und den Verflüssiger 12. Die in dem Verflüssiger 12 von dem ersten Kühlmittel 210 aufgenommene Wärme wird zu dem Innenraum-Wärmetauscher 26 befördert und kann dort zur Temperierung an eine Luftströmung in den Fahrzeuginnenraum abgegeben werden.

Das Kältemittel 100 wird in dem in Figur 2 gezeigten Extrem-Heizbetrieb von der Hochdruckseite des Kompressors 11 über das Umschaltventil 18, das in die erste Schaltposition 181 geschaltet ist, zu dem Verflüssiger 12 befördert, über den das Kältemittel 100 Wärme an den ersten Kühlmittel-Kreislauf 21 abgeben kann. Die von dem ersten Kühlmittel 210 aufgenommene Wärme wird zu dem Innenraum-Wärmetauscher 26 befördert und kann dort an eine Luftströmung in den Fahrzeuginnenraum abgegeben werden.

Das über den Verflüssiger 12 abgekühlte Kältemittel 100 wird über das Rückschlagventil 14a der Expansionseinrichtung 14 zu dem inneren Wärmetauscher 19 befördert, über den das Kältemittel 100 weitere Wärme an den Gegenstrom des Kältemittels 100 abgeben kann. Anschließend wird das Kältemittel 100 zu der Drossel 15b der Expansionseinrichtung 15 befördert, die eine Druckminderung des Kältemittels 100 bewirkt. Stromabwärts der Drossel 15b gelangt das Kältemittel 100 zu dem Steuerventil 16, das in eine zweite Schaltposition 162 geschaltet ist, um das Kältemittel 100 in die Umgehungsleitung 33 zu leiten. Das Kältemittel 100 durchströmt folglich nicht den Verdampfer 13 und nimmt somit über den Verdampfer 13 auch keine Wärme von dem zweiten Kühlmittel-Kreislauf 22 auf. Der zweite Kühlmittel-Kreislauf 22 kann daher funktionslos geschaltet sein oder einen eigenen Wärmepumpen-Kreislauf darstellen. Im letzteren Fall kann das zweite Kühlmittel 220 in einem Aggregat-Wärmetauscher 24 Wärme aufnehmen und beispielweise an einen eingefrorenen Umgebungs-Wärmetauscher 25 zum Abtauen des Umgebungs-Wärmetauscher 25 wieder abgeben. Der zweite Kühlmittel-Kreislauf 22 steht hierzu mit dem Kältemittel-Kreislauf 10 vorteilhafterweise nicht in einem Wärmeaustausch.

Das Kältemittel 100 gelangt sodann über das Umschaltventil 18 in den Sammelbehälter 17, in dem das Kältemittel 100 für eine gewisse Zeit gespeichert werden kann. Aus dem Sammelbehälter 17 kann das zwischengespeicherte Kältemittel 100 wiederum von dem Kompressor 11 heraus gefördert werden und über den sich anschließenden inneren Wärmetauscher 19 Wärme von dem Kältemittel-Gegenstrom aufnehmen. Das Kältemittel 100 wird sodann über das Abzweigventil 20a zu dem Motor-Wärmetauscher 20 geleitet sein, über den das Kältemittel 100 weitere Wärme aufnehmen kann. Die Erwärmung kann unmittelbar durch ein Überströmen des Motor-Wärmetauschers 20 erfolgen. Der Motor M des Kompressors 11 wird dabei gekühlt. Durch den Kompressor 11 wird das Kältemittel 100 wieder der Hochdruckseite des Kompressors zugeführt.

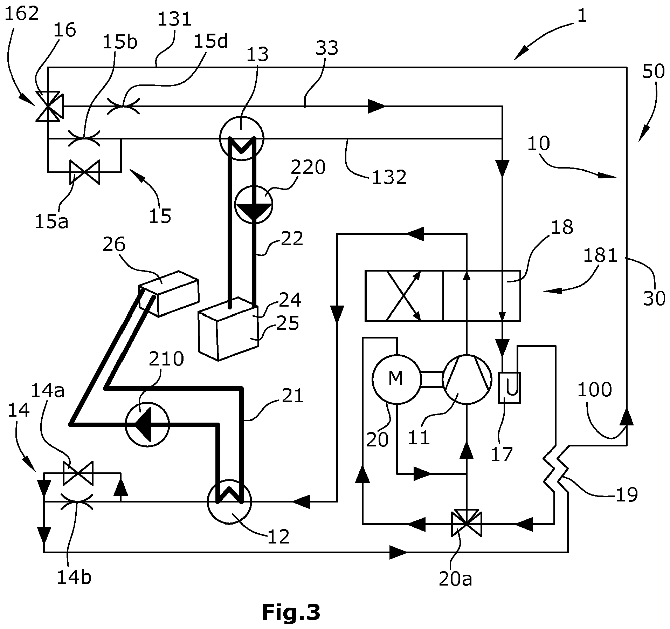

In der Figur 3 ist eine alternative Ausgestaltung des Kältemittel-Kreislaufs 10 des Heiz-/Kühlsystems 1 in dem Extrem-Heizbetrieb gezeigt. In dieser Ausgestaltung zweigt die Umgehungsleitung 33 in Strömungsrichtung vor der Expansionseinrichtung 15 von der Hauptleitung 30 ab. An der Abzweigung ist das Steuerventil 16 angeordnet, das in die zweite Schaltposition 162 geschaltet ist, so dass der Kältemittelstrom 100 in die Umgehungsleitung 33 geleitet wird. Innerhalb der Umgehungsleitung 33 ist eine Drossel 15d angeordnet. Dadurch erfolgt eine Druckminderung des Kältemittels 100 in der Umgehungsleitung 33. Das thermische Zusammenwirken bzw. die Wärmeleitung in dem Kältemittel-Kreislauf 10 dieser Ausgestaltung entspricht dem thermischen Zusammenwirken des in der Figur 2 gezeigten Kältemittel-Kreislaufs 10.

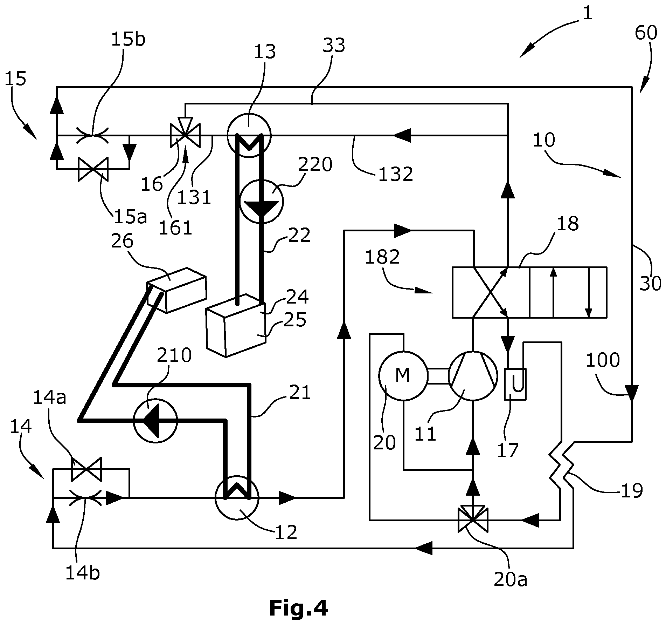

In der Figur 4 ist der Kältemittel-Kreislauf 10 in einem Kühlbetrieb gezeigt. Der Kühlbetrieb ist für eine normale Temperierung des Fahrzeuginnenraums insbesondere bei Umgebungstemperaturen zwischen +20°C und +30°C vorgesehen.

In dem Kühlbetrieb wird der Kältemittel-Kreislauf 10 als eine Kälteanlage 60 betrieben. Dazu wird das Kältemittel 100 von der Hochdruckseite des Kompressors 11 über das Umschaltventil 18, das in eine zweite Schaltposition 182 geschaltet ist und eine Strömungsumkehrung bewirkt, zu dem Verdampfer 13 geleitet, der im Kühlbetrieb als Verflüssiger fungiert. Das Kältemittel 100 gibt dabei Wärme über den Verdampfer 13 an den zweiten Kühlmittel-Kreislauf 22 ab. Die von dem zweiten Kühlmittel 220 aufgenommene Wärme wird zu dem Umgebungs-Wärmetauscher 25 befördert und kann dort an die Umgebung abgegeben werden.

Das über den Verdampfer 13 abgekühlte Kältemittel 100 wird über das Steuerventil 16, das in die erste Schaltposition 161 geschaltet ist, und ein Rückschlagventil 15a der Expansionseinrichtung 15 zu dem inneren Wärmetauscher 19 befördert, in dem das Kältemittel 100 weitere Wärme an den Gegenstrom des Kältemittels 100 abgeben kann. Anschließend wird das Kältemittel 100 zu einer Drossel 14b der Expansionseinrichtung 14 befördert, die eine Druckminderung des Kältemittels 100 bewirkt. Stromabwärts der Drossel 14b gelangt das Kältemittel 100 zum dem Verflüssiger 12, der als ein Verdampfer fungiert. In dem Verflüssiger 12 nimmt das Kältemittel 100 Wärme von dem ersten Kühlmittel-Kreislauf 21 auf. Der erste Kühlmittel-Kreislauf 21 kann folglich für eine Kühlung des Fahrzeuginnenraums in dem Innenraum-Wärmetauscher 26 Wärme aufnehmen und in dem Verflüssiger 12 an den Kältemittelstrom 100 wieder abgeben.

Das erwärmte Kältemittel 100 gelangt sodann über das Umschaltventil 18 in den Sammelbehälter 17, in dem das Kältemittel 100 für eine gewisse Zeit gespeichert werden kann. Das aus dem Sammelbehälter 17 beförderte Kältemittel 100 kann über den sich anschließenden inneren Wärmetauscher 19 Wärme von dem Kältemittel-Gegenstrom aufnehmen. Das Ventil 20a ist nun derart geschaltet, dass der Kältemittelstrom 100 nicht zu dem Motor-Wärmetauscher 20, sondern direkt zu dem Kompressor 11 geleitet wird. Sobald der Motor-Wärmetauscher 20 eine bestimmte Temperatur übersteigt, kann der Kältemittelstrom 100 wieder über den Motor-Wärmetauscher 20 geleitet werden. Durch den Kompressor 11 wird das Kältemittel 100 wieder der Hochdruckseite des Kompressors zugeführt.

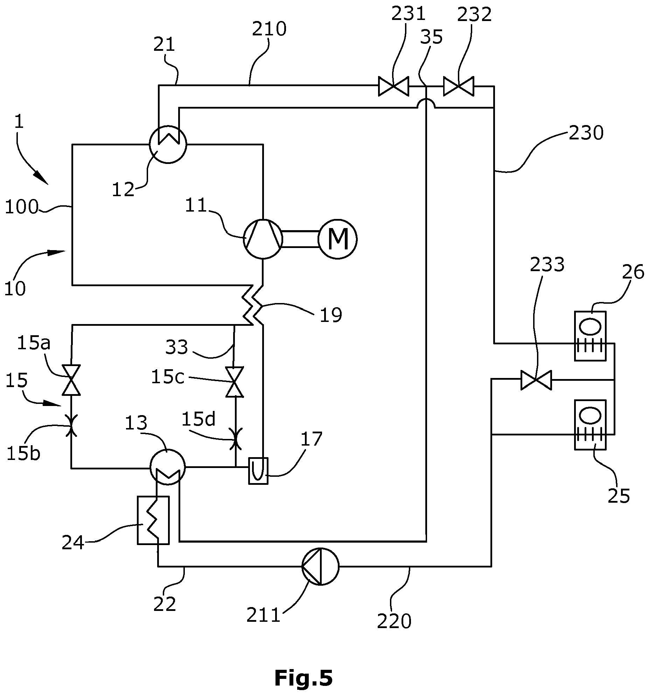

In der Figur 5 ist der Kältemittel-Kreislauf 10 mit einer alternativen Ausgestaltung des Kühlmittel-Kreislaufs 21, 22, 23 gezeigt.

Der Kältemittel-Kreislauf 10 steht, wie in den zuvor beschriebenen Ausgestaltungen, über den Verflüssiger 12 mit dem ersten Kühlmittel-Kreislauf 21 und über den Verdampfer 13 mit dem zweiten Kühlmittel-Kreislauf 22 in einem Wärmetausch. Hierzu ist der Verflüssiger 12 und der Verdampfer 13 von dem Kühlmittel 210, 220, 230 durchströmbar. Der Kältemittel-Kreislauf 10 kann - wie vorliegend dargestellt - ohne Kreislaufumkehr oder mit Kreislaufumkehr vorgesehen sein. Die Umgehungsleitung 33 zweigt in dieser Ausgestaltung vor dem Rückschlagventil 15a von der Hauptleitung 30 ab, so dass zur Druckregulierung zusätzlich in der Umgehungsleitung 33 ein Rückschlagventil 15c und eine Drossel 15d angeordnet sind.

Der erste Kühlmittel-Kreislauf 21 ist über eine Abzweigung bzw. Verbindung 35 mit dem zweiten Kühlmittel-Kreislauf 22 verbunden, so dass der erste Kühlmittel-Kreislauf 21 und der zweite Kühlmittel-Kreislauf 22 in der in Figur 5 gezeigten Ausgestaltung zu einem Gesamt-Kühlmittel-Kreislauf 23 verschaltet sind. Die Schaltung ist für einen reinen Heizbetrieb vorgesehen, kann jedoch auch für einen Kühlbetrieb eingesetzt werden.

Der Gesamt-Kühlmittel-Kreislauf 23 weist eine Kühlmittel-Pumpe 211 auf, die eine Zirkulation des Kühlmittels 210, 220, 230 ermöglicht. Zum Leiten des Kühlmittelstroms 210, 220, 230 in dem Kühlmittel-Kreislauf 21, 22, 23 sind ein erstes Absperrventil 231, ein zweites Absperrventil 232 und ein drittes Absperrventil 233 vorgesehen. Ferner weist der Kühlmittel-Kreislauf 21, 22, 23 einen Innenraum-Wärmetauscher 26, einen Umgebungs-Wärmetauscher 25 sowie einen Aggregat-Wärmetauscher 24 auf, über die das Kühlmittel 210, 220, 230 Wärme aufnehmen und/oder abgeben kann.

In einem Normal-Heizbetrieb, in dem das Kältemittel 100 den Verdampfer 13 durchströmt, ist das erste Absperrventil 231 und das dritte Absperrventil 233 in einer Offen-Position, in der ein Durchströmen möglich ist, und das zweite Absperrventil 232 in einer Sperr-Position, in der ein Durchströmen verhindert wird. Dadurch strömt das von der Kühlmittel-Pumpe 211 beförderte Kühlmittel 210, 220, 230 von der Pumpe 211 zu dem Aggregat-Wärmetauscher 24, in dem das Kühlmittel 210, 220, 230 Wärme von einem Aggregat aufnehmen kann. Das Aggregat kann ein Fahrzeugaggregat, beispielsweise eine Batterie sein. Alternativ ist das Aggregat eine Zusatzheizung, wie ein PTC-Heizer. Das erwärmte Kühlmittel 210, 220, 230 gelangt sodann durch den Verdampfer 13, in dem das Kühlmittel 210, 220, 230 Wärme an das Kältemittel 100 abgeben kann, weiter durch das offen-geschaltete erste Absperrventil 231 zu dem Verflüssiger 12. In dem Verflüssiger 12 nimmt das Kühlmittel 210, 220, 230 Wärme von dem Kältemittel 100 auf. Das erwärmte Kühlmittel 210, 220, 230 wird direkt zu dem Innenraum-Wärmetauscher 26 befördert, in dem das Kühlmittel 210, 220, 230 Wärme zur Beheizung eines nicht dargestellten Fahrzeuginnenraums abgibt. Das abgekühlte Kühlmittel 210, 220, 230 strömt durch das offen-geschaltete dritte Absperrventil 233 wiederum zu der Pumpe 211. Bei dieser Schaltung ergibt sich mittels der Wärmepumpenfunktion des Kältemittel-Kreislaufs 10 eine Verstärkung der durch den Aggregat-Wärmetauscher 24 an das Kühlmittel 210, 220, 230 zugeführten Wärmeleistung. So ergibt sich in dem Kühlmittel 210, 220, 230 beispielsweise aus einer in dem Aggregat-Wärmetauscher 24 zugeführte Wärmeleistung von 1kW aufgrund der Verstärkung durch die Wärmepumpenfunktion eine Gesamt-Wärmeleistung von 3kW.

Alternativ zu der oben beschriebenen Schaltung gibt das Kühlmittel 210, 220, 230 in dem Innenraum-Wärmetausch 26 nur teilweise Wärme ab und strömt teil-erwärmt aus dem Innenraum-Wärmetauscher 26 heraus. Dadurch ergibt sich ebenfalls ein selbstverstärkender Effekt bei dem Wärmetausch mit dem Kältemittel-Kreislauf 10, das heißt die Temperatur des Kühlmittels 210, 220, 230 steigt mit der Anzahl der Durchläufe durch den Verdampfer 13 und den Verflüssiger 12.

In einem Extrem-Heizbetrieb, in dem das Kältemittel 100 durch die Umgehungsleitung 33 strömt, kann die gleiche Verschaltung der Absperrventile 231, 232, 233 wie oben in dem Normal-Heizbetrieb der in Figur 5 dargestellten Ausgestaltung geschaltet sein, das heißt das erste Absperrventil 231 und das dritte Absperrventil 233 sind in der Offen-Position, das zweite Absperrventil 232 in der Sperr-Position geschaltet. Dadurch ergibt sich eine gleiche Durchström-Reihenfolge des Kühlmittels 210, 220, 230 wie oben in dem Normal-Heizbetrieb, jedoch gibt das Kühlmittel 210, 220, 230 in dem Verdampfer 13 keine Wärme an den Kältemittelstrom 100 ab. Dadurch nimmt das Kühlmittel 210, 220, 230, das in dem Aggregat-Wärmetauscher 24 erwärmt wird, der - wie oben erläutert - auch als eine Zusatzheizung ausgebildet sein kann, auch in dem sich anschließenden Verflüssiger 12 weiter Wärme auf. Das so erhitzte Kühlmittel 210, 220, 230 gelangt zu dem Innenraum-Wärmetauscher 26, in dem das Kühlmittel 210, 220, 230 sehr viel Wärme zur Beheizung eines nicht dargestellten Fahrzeuginnenraums abgeben kann.

In einem alternativen Extrem-Heizbetrieb, insbesondere zum Abtauen eines eingefrorenen Umgebungs-Wärmetauschers 25, erfolgt die gleiche Verschaltung wie oben in dem Extrem-Heizbetrieb der in Figur 5 dargestellten Ausgestaltung, jedoch wird das dritte Absperrventil 233 in eine Sperr-Position geschaltet. Hierbei wird das Kühlmittel 210, 220, 230 von dem Innenraum-Wärmetauscher 26, in dem das Kühlmittel 210, 220, 230 nur teilweise Wärme abgibt, in den Umgebungs-Wärmetauschers 25 befördert. Somit weist das aus dem Innenraum-Wärmetauscher 26 ausströmende Kühlmittel 210, 220, 230 bei Einströmen in den Umgebungs-Wärmetauscher 25 immer noch eine zum Abtauen des Umgebungs-Wärmetauschers 25 ausreichend hohe Temperatur auf. Dadurch kann das noch warme Kühlmittel 210, 220, 230 Wärme an den eingefrorenen Umgebungs-Wärmetauscher 25 abgeben, so dass ein Abtauen des Umgebungs-Wärmetauschers 25 möglich ist.

In einem möglichen Kühlbetrieb, in dem das Kältemittel 100 durch den Verdampfer 13 strömt, ist das erste Absperrventil 231 in einer Sperr-Position, das zweite Absperrventil 232 und das dritte Absperrventil 233 in einer Offen-Position. Dadurch strömt das Kühlmittel 210, 220, 230 von der Pumpe 211 zu dem Aggregat-Wärmetauscher 24, in dem das Kühlmittel 210, 220, 230 Wärme von einem Aggregat aufnehmen kann.

Das erwärmte Kühlmittel 210, 220, 230 gelangt sodann durch den Verdampfer 13, in dem das Kühlmittel 210, 220, 230 Wärme an das Kältemittel 100 abgibt. Das abgekühlte Kühlmittel 210, 220, 230 wird sodann durch das offen-geschaltete zweite Absperrventil 232 zu dem Innenraum-Wärmetauscher 26 befördert, in dem das Kühlmittel 210, 220, 230 Wärme zur Kühlung eines nicht dargestellten Fahrzeuginnenraums aufnehmen kann. Von dem Innenraum-Wärmetauscher 26 gelangt das Kühlmittel 210, 220, 230 über das Absperrventil 233 wieder zu der Pumpe 211.

### Referenzliste

- 1: Heiz-/Kühlsystem
- 10: Kältemittelkreislauf
- 11: Kompressor
- 12: Verflüssiger
- 13: Verdampfer
- 14: Expansionseinrichtung
- 14a: Rückschlagventil
- 14b: Drossel
- 15: Expansionseinrichtung
- 15a: Rückschlagventil
- 15b: Drossel
- 15c: Rückschlagventil
- 15d: Drossel
- 16: Steuerventil
- 17: Sammelbehälter
- 18: Umschaltventil
- 19: innerer Kältemittel-Wärmetauscher
- 20: Motor-Wärmetauscher
- 20a: Abzweigventil
- 21: erster Kühlmittel-Kreislauf
- 22: zweiter Kühlmittel-Kreislauf
- 23: Gesamt-Kühlmittel-Kreislauf
- 24: Aggregat-Wärmetauscher
- 25: Umgebungs-Wärmetauscher
- 26: Innenraum-Wärmetauscher
- 30: Hauptleitung
- 33: Umgehungsleitung
- 35: Verbindungsstelle
- 50: Wärmepumpenbetrieb
- 60: Kälteanlagenbetrieb

- 100: Kältemittelstrom
- 210: erster Kühlmittelstrom
- 220: zweiter Kühlmittelstrom
- 230: Gesamt-Kühlmittelstrom
- 131: Verdampfer-Zuström-/Eingangsseite
- 132: Verdampfer-Abström-/Ausgangsseite
- 161: erste Schaltposition des Steuerventils
- 162: zweite Schaltposition des Steuerventils
- 181: erste Schaltposition des Umschaltventils
- 182: zweite Schaltposition des Umschaltventils
- 211: Kühlmittel-Pumpe
- 231: Absperrventil
- 232: Absperrventil
- 233: Absperrventil

## Patentansprüche

1. Heiz-/Kühlsystem (1) für Kraftfahrzeuge mit einem als Wärmepumpe (50) und/oder als Kältemaschine (60) ausgebildeten Kältemittel-Kreislauf (10), der zumindest eine von einem Kältemittel (100) durchströmbare Hauptleitung (30), einen Kompressor (11), einen Verflüssiger (12), einen Verdampfer (13), eine Expansionseinrichtung (14, 15) und einen inneren Kältemittel-Wärmetauscher (19) aufweist, der beidseitig von dem Kältemittel (100) durchströmbar ist, wobei der Verflüssiger (12) mit einem ersten Kühlmittel-Kreislauf (21) und der Verdampfer (13) mit einem zweiten Kühlmittel-Kreislauf (22) koppelbar ist, wobei der Verdampfer (13) des Kältemittel-Kreislaufs (10) kältemittelseitig umgehbar ist, so dass der Verdampfer (13) in dem Kältemittel-Kreislauf (10) vollständig überbrückt ist, **dadurch gekennzeichnet, dass** der Kältemittel-Kreislauf (10) ein Umschaltventil (18) zur Umkehrung der Strömungsrichtung des Kältemittelstroms (100) aufweist.

2. Heiz-/Kühlsystem (1) nach Anspruch 1, **dadurch gekennzeichnet, dass** der Kältemittel-Kreislauf (10) eine Umgehungsleitung (33) aufweist, die den Verdampfer (13) sowie einen Teil der Hauptleitung (30) überbrückt.

3. Heiz-/Kühlsystem (1) nach einem der Ansprüche 1 oder 2, **dadurch gekennzeichnet, dass** der Kältemittel-Kreislauf (10) ein Steuerventil (16) zum Leiten des Kältemittels (100) zu dem Verdampfer (13) und/oder zu einer Umgehung des Verdampfers (13) aufweist.

4. Heiz-/Kühlsystem (1) nach einem der voranstehenden Ansprüche, **dadurch gekennzeichnet, dass** der Kältemittel-Kreislauf (10) einen Motor-Wärmetauscher (20) aufweist, insbesondere einen Wärmetauscher eines Antriebsmotors des Kompressors (11).

5. Heiz-/Kühlsystem (1) nach einem der voranstehenden Ansprüche, **dadurch gekennzeichnet, dass** der Kältemittel-Kreislauf (10) eine Drossel (14b, 15b) aufweist, die verstellbar ist.

6. Heiz-/Kühlsystem (1) nach einem der voranstehenden Ansprüche, **dadurch gekennzeichnet, dass** der Kältemittel-Kreislauf (10) einen Sammelbehälter (17) zur Zwischenspeicherung des Kältemittels (100) aufweist.

7. Heiz-/Kühlsystem (1) nach einem der voranstehenden Ansprüche, **dadurch gekennzeichnet, dass** der erste Kühlmittel-Kreislauf (21) und/oder der zweite Kühlmittel-Kreislauf (22) zumindest einen Innenraum-Wärmetauscher (26) zur Beheizung oder Kühlung des Fahrzeuginnenraums aufweisen, so dass der Innenraum-Wärmetauscher (26) über den Verflüssiger (12) und/oder den Verdampfer (13) mit dem Kältemittel-Kreislauf (10) gekoppelt werden kann.

8. Heiz-/Kühlsystem (1) nach einem der voranstehenden Ansprüche, **dadurch gekennzeichnet, dass** der erste Kühlmittel-Kreislauf (21) und/oder der zweite Kühlmittel-Kreislauf (22) zumindest einen Aggregat-Wärmetauscher (24) aufweisen, insbesondere einen Wärmetauscher eines Antriebsmotors oder einer Batterie, so dass der Aggregat-Wärmetauscher (24) über den Verflüssiger (12) und/oder den Verdampfer (13) mit dem Kältemittel-Kreislauf (10) gekoppelt werden kann.

9. Heiz-/Kühlsystem (1) nach einem der voranstehenden Ansprüche, **dadurch gekennzeichnet, dass** der erste Kühlmittel-Kreislauf (21) und/oder der zweite Kühlmittel-Kreislauf (22) zumindest einen Umgebungs-Wärmetauscher (25) aufweisen, der über den Verflüssiger (12) und/oder den Verdampfer (13) mit dem Kältemittel-Kreislauf (10) gekoppelt werden kann.

10. Heiz-/Kühlsystem (1) nach einem der voranstehenden Ansprüche, **dadurch gekennzeichnet, dass** der erste Kühlmittel-Kreislauf (21) und der zweite Kühlmittel-Kreislauf (22) zu einem Gesamt-Kühlmittel-Krelslauf (23) verschaltbar sind.

11. Verfahren zum Betreiben eines Heiz-/Kühlsystems (1) gemäß Anspruch 1 mit den folgenden Schritten:
- für einen Normal-Heizmodus wird ein Steuerventil (16) des Kältemittel-Kreislaufs (10) in eine erste Schaltposition (161) und ein Umschaltventil (18) des Kältemittel-Kreislaufs (10) in eine erste Schaltposition (181) geschaltet, so dass ein Kältemittelstrom (100) des Kältemittel-Kreislaufs (10) von einer Ausgangsseite eines Kompressors (11) durch das Umschaltventil (18) in einen Verflüssiger (12), von dem Verflüssiger (12) durch ein Rückschlagventil (14a) zu einer Drossel (15b), von der Drossel (15b) in einen Verdampfer (13) und von dem Verdampfer (13) durch das Umschaltventil (18) zu einer Eingangsseite des Kompressors (11) befördert wird,
- für einen Extrem-Heizmodus wird das Steuerventil (16) in eine zweite Schaltposition (162) geschaltet und das Umschaltventil (18) in die erste Schaltposition (181) geschaltet, so dass der Kältemittelstrom (100) von der Ausgangsseite (132) des Kompressors (11) durch das Umschaltventil (18) in den Verflüssiger (12), von dem Verflüssiger (12) durch das Rückschlagventil (14a) zu der Drossel (15b), von der Drossel (15b) in eine Umgehungsleitung (33) und von der Umgehungsleitung (33) durch das Umschaltventil (18) zu der Eingangsseite (131) des Kompressors (11) befördert wird und
- für einen Kühlmodus wird das Umschaltventil (18) in eine zweite Schaltposition (182) und das Steuerventil (16) in die erste Schaltposition (161) geschaltet, so dass der Kältemittelstrom (100) von einer Ausgangsseite des Kompressors (11) durch das Umschaltventil (18) zu dem Verdampfer (13), von dem Verdampfer (13) durch ein Rückschlagventil (15a) zu einer Drossel (14b), von der Drossel (14b) zu dem Verflüssiger (12), von dem Verflüssiger (12) durch das Umschaltventil (18) zu der Eingangsseite des Kompressors (11) befördert wird.

12. Verfahren nach Anspruch 11, wobei dem Kältemittel-Kreislauf (10) ein innerer Kältemittel-Wärmetauscher (19) zugeordnet wird, so dass in dem inneren Kältemittel-Wärmetauscher (19)
- in dem Normal-Heizmodus der von dem Verflüssiger (12) zu dem Verdampfer (13) strömende Kältemittelstrom (100) Wärme an den von dem Verdampfer (13) zu dem Kompressor (11) strömenden Kältemittelstrom (100) abgibt,
- in dem Extrem-Heizmodus der von dem Verflüssiger (12) zu dem Verdampfer (13) strömende Kältemittelstrom (100) Wärme an den von der Umgehungsleitung (33) zu dem Kompressor (11) strömenden Kältemittelstrom (100) abgibt, und
- in dem Kühlmodus der von dem Verdampfer (13) zu dem Verflüssiger (12) strömende Kältemittelstrom (100) Wärme an den von dem Verflüssiger (12) zu dem Kompressor (11) strömenden Kältemittelstrom (100) abgibt.

13. Verfahren nach einem der Ansprüche 11 oder 12, wobei dem Kältemittel-Kreislauf (10) ein Sammelbehälter (17) zugeordnet wird, so dass
- in dem Normal-Heizmodus der von dem Verdampfer (13) zu dem Kompressor (11) strömende Kältemittelstrom (100) in dem Sammelbehälter (17) zwischengespeichert wird,
- in dem Extrem-Heizmodus der von der Umgehungsleitung (33) zu dem Kompressor (11) strömende Kältemittelstrom (100) in dem Sammelbehälter (17) zwischengespeichert wird, und
- in dem Kühlmodus der von dem Verflüssiger (12) zu dem Kompressor (11) strömende Kältemittelstrom (100) in dem Sammelbehälter (17) zwischengespeichert wird.

## Claims

1. Heating/cooling system (1) for motor vehicles comprising a refrigerant coolant circuit (10) configured as a heat pump (50) and/or as a refrigerating machine (60), which circuit comprises at least one main line (30) through which a refrigerant (100) can flow, a compressor (11), a condenser (12), an evaporator (13), an expansion device (14, 15) and an inner refrigerant heat exchanger (19) through which refrigerant (100) can flow from both sides, wherein the condenser (12) can be coupled with a first coolant circuit (21) and the evaporator (13) can be coupled with a second coolant circuit (22), wherein the evaporator (13) of the refrigerant circuit (10) can be bypassed on the refrigerant side so that the evaporator (13) is completely bypassed in the refrigerant circuit (10), **characterized in that** the refrigerant circuit (10) comprises a switch valve (18) for reversing the flow direction of the refrigerant flow (100).

2. Heating/cooling system (1) of claim 1, **characterized in that** the refrigerant circuit (10) comprises a bypass line (33) which bypasses the evaporator (13) and part of the main line (30).

3. Heating/cooling system (1) of one of claims 1 or 2, **characterized in that** the refrigerant circuit (10) comprises a control valve (16) for directing the refrigerant (100) to the evaporator (13) and/or to a bypass of the evaporator (13).

4. Heating/cooling system (1) of one of the preceding claims, **characterized in that** the refrigerant circuit (10) comprises a motor heat exchanger (20), in particular a heat exchanger of a drive motor of the compressor (11).

5. Heating/cooling system (1) of one of the preceding claims, **characterized in that** the refrigerant circuit (10) comprises an adjustable throttle (14b, 15b).

6. Heating/cooling system (1) of one of the preceding claims, **characterized in that** the refrigerant circuit (10) comprises a collecting container (17) for buffering the refrigerant (100).

7. Heating/cooling system (1) of one of the preceding claims, **characterized in that** the first coolant circuit (21) and/or the second coolant circuit (22) comprise at least one interior heat exchanger (26) for heating or cooling the vehicle interior so that the interior heat exchanger (26) can be coupled to the refrigerant circuit (10) via the condenser (12) and/or the evaporator (13).

8. Heating/cooling system (1) of one of the preceding claims, **characterized in that** the first coolant circuit (21) and/or the second coolant circuit (22) comprise at least one aggregate heat exchanger (24), in particular a heat exchanger of a drive motor or a battery, so that the aggregate heat exchanger (24) can be coupled to the refrigerant circuit (10) via the condenser (12) and/or the evaporator (13).

9. Heating/cooling system (1) of one of the preceding claims, **characterized in that** the first coolant circuit (21) and/or the second coolant circuit (22) comprise at least one ambient heat exchanger (25) which can be coupled to the refrigerant circuit (10) via the condenser (12) and/or the evaporator (13).

10. Heating/cooling system (1) of one of the preceding claims, **characterized in that** the first coolant circuit (21) and the second coolant circuit (22) can be interconnected to form an overall coolant circuit (23).

11. Method for operating a heating/cooling system (1) of claim 1, the method comprising the following steps:
- for a normal heating mode, a control valve (16) of the refrigerant circuit (10) is switched to a first switching position (161) and a switching valve (18) of the refrigerant circuit (10) is switched to a first switching position (181), so that a refrigerant flow (100) of the refrigerant circuit (10) is conveyed from an output side of a compressor (11) into a condenser (12) through the switching valve (18), from the condenser (12) to a throttle (15b) through a check valve (14a), from the throttle (15b) into an evaporator (13) and from the evaporator (13) to an input side of the compressor (11) through the switching valve (18),
- for an extreme heating mode, the control valve (16) is switched to a second switching position (162) and the switching valve (18) is switched to the first switching position (181), so that the refrigerant flow (100) is conveyed from the output side (132) of the compressor (11) into the condenser (12) through the switching valve (18), from the condenser (12) to the throttle (15b) through the check valve (14a), from the throttle (15b) into a bypass line (33) and from the bypass line (33) to the input side (131) of the compressor (11) through the switching valve (18), and
- for a cooling mode, the switching valve (18) is switched to a second switching position (182) and the control valve (16) is switched to the first switching position (161), so that the refrigerant flow (100) is conveyed from an output side of the compressor (11) to the evaporator (13) through the switching valve (18), from the evaporator (13) to a throttle (14b) through a check valve (15a), from the throttle (14b) to the condenser (12), from the condenser (12) to the input side of the compressor (11) through the switching valve (18).

12. The method of claim 11, wherein an inner refrigerant heat exchanger (19) is assigned to the refrigerant circuit (10), so that in the inner refrigerant heat exchanger (19):
- in the normal heating mode, the refrigerant flow (100) flowing from the condenser (12) to the evaporator (13) transfers heat to the coolant flow (100) flowing from the evaporator (13) to the compressor (11),
- in the extreme heating mode, the refrigerant flow (100) flowing from the condenser (12) to the evaporator (13) transfers heat to the refrigerant flow (100) flowing from the bypass line (33) to the compressor (11), and
- in the cooling mode, the refrigerant flow (100) flowing from the evaporator (13) to the condenser (12) transfers heat to the refrigerant flow (100) flowing from the condenser (12) to the compressor (11).

13. Method of one of claims 11 or 12, wherein a collecting container (17) is assigned to the refrigerant circuit (10), so that
- in the normal heating mode, the refrigerant flow (100) flowing from the evaporator (13) to the compressor (11) is buffered in the collecting container (17),
- in the extreme heating mode, the refrigerant flow (100) flowing from the bypass line (33) to the compressor (11) is buffered in the collecting container (17), and
- in the cooling mode, the refrigerant flow (100) flowing from the condenser (12) to the compressor (11) is buffered in the collecting container (17).

## Revendications

1. Système de chauffage/refroidissement (1) pour véhicules automobiles comprenant un circuit de liquide de refroidissement (10) conçu comme une pompe à chaleur (50) et/ou comme une machine frigorifique (60), le circuit comprenant au moins une conduite principale (30) à travers laquelle un liquide de refroidissement (100) peut s'écouler, un compresseur (11), un condenseur (12), un évaporateur (13), au moins un dispositif d'expansion (14, 15) et au moins un échangeur de chaleur de liquide de refroidissement interne (19) à travers lequel le flux de liquide de refroidissement (100) peut s'écouler des deux côtés, le condenseur (12) pouvant être relié avec un premier circuit de liquide de refroidissement (21) et l'évaporateur pouvant être relié avec un deuxième circuit de liquide de refroidissement (21), ledit évaporateur (13) dudit circuit de liquide de refroidissement (10) pouvant être contourné, côté liquide de refroidissement, de sorte que ledit évaporateur (13) est complètement ponté dans le circuit de liquide de refroidissement (10), **caractérisé en ce que** le circuit de liquide de refroidissement (10) comprend une vanne de commutation (18) pour inverser le sens d'écoulement du flux de liquide de refroidissement (100).

2. Système de chauffage/refroidissement (1) selon la revendication 1, **caractérisé en ce que** le circuit de liquide de refroidissement (10) comprend une conduite de dérivation (33) pontant l'évaporateur (13) et une partie de la conduite principale (30).

3. Système de chauffage/refroidissement (1) selon l'une des revendications 1 ou 2, **caractérisé en ce que** le circuit de liquide de refroidissement (10) comprend une vanne de commande (16) pour diriger le liquide de refroidissement (100) vers l'évaporateur (13) et/ou vers une dérivation de l'évaporateur (13).

4. Système de chauffage/refroidissement (1) selon l'une quelconque des revendications précédentes, **caractérisé en ce que** le circuit de liquide de refroidissement (10) comprend un échangeur de chaleur de moteur (20), en particulier un échangeur de chaleur d'un moteur d'entrainement du compresseur (11).

5. Système de chauffage/refroidissement (1) selon l'une quelconque des revendications précédentes, **caractérisé en ce que** le circuit de liquide de refroidissement (10) présente un papillon (14b, 15b) réglable.

6. Système de chauffage/refroidissement (1) selon l'une quelconque des revendications précédentes, **caractérisé en ce que** le circuit de liquide de refroidissement (10) comprend un récipient collecteur (17) pour le stockage intermédiaire du liquide de refroidissement (100).

7. Système de chauffage/refroidissement (1) selon l'une quelconque des revendications précédentes, **caractérisé en ce que** le premier circuit de liquide de refroidissement (21) et/ou le deuxième circuit de liquide de refroidissement (22) comprennent au moins un échangeur de chaleur intérieur (26) pour chauffer ou refroidir le habitacle du véhicule de telle sorte que l'échangeur de chaleur intérieur (26) peut être couplé au circuit de liquide de refroidissement (10) par l'intermédiaire du condenseur (12) et/ou l'évaporateur (13).

8. Système de chauffage/refroidissement (1) selon l'une quelconque des revendications précédentes, **caractérisé en ce que** le premier circuit de liquide de refroidissement (21) et/ou le deuxième circuit de liquide de refroidissement (22) comprennent au moins un échangeur de chaleur d'agrégat (24), en particulier un échangeur de chaleur d'un moteur d'entrainement ou d'une batterie, de sorte que l'échangeur de chaleur d'agrégat (24) peut être couplé au circuit de liquide de refroidissement (10) via le condenseur (12) et/ou l'évaporateur (13).

9. Système de chauffage/refroidissement (1) selon l'une quelconque des revendications précédentes, **caractérisé en ce que** le premier circuit de refroidissement (21) et/ou le deuxième circuit de refroidissement (22) comprennent au moins un échangeur de chaleur ambiante (25) pouvant être connecté au circuit liquide de refroidissement (10) via le condenseur (12) et /ou l'évaporateur (13).

10. Système de chauffage/refroidissement (1) selon l'une quelconque des revendications précédentes, **caractérisé en ce que** le premier circuit de liquide de refroidissement (21) et le deuxième circuit de liquide de refroidissement (22) peuvent être interconnectés pour former un circuit de liquide de refroidissement global (23).

11. Procédé pour opérer un système de chauffage/refroidissement (1) selon la revendication 1, le procédé comprenant les étapes suivantes:
- pour un mode de chauffage normal, une vanne de commande (16) du circuit de liquide de refroidissement (10) est commutée vers une première position de commutation (161) et une vanne de commutation (18) est commutée vers une première position de commutation (181) de sorte qu'un flux de liquide de refroidissement (100) du circuit de liquide de refroidissement (10) est transporté d'un côté sortie d'un compresseur (11) dans un condenseur (12) par la vanne de commutation (18), du condenseur (12) vers un papillon (15b) par la vanne anti-retour (14a), du papillon (15b) dans un évaporateur (13) et depuis l'évaporateur (13) vers un côté d'entrée du compresseur (11) par la vanne de commutation (18),
- pour un mode de chauffage extrême, la vanne de commande (16) est commutée vers une deuxième position de commutation (162) et la vanne de commutation (18) est commutée vers la première position de commutation (181) de sorte que le flux de liquide de refroidissement (100) est transporté du côté sortie (132) du compresseur (11) dans le condenseur (12) par la vanne de commutation (18), du condenseur (12) au papillon (15b) par la vanne anti-retour (14a), du papillon (15b) à une conduite de dérivation (33) et de la conduite de dérivation (33) du côté d'entrée (131) du compresseur (11) par la vanne de commutation (18), et
- pour un mode de refroidissement, la vanne de commutation (18) est commutée vers une deuxième position de commutation (182) et la vanne de commande (16) est commutée vers la première position de commutation (161), de sorte que le flux de liquide de refroidissement (100) est transporté d'un côté sortie du compresseur (11) à l'évaporateur (13) par la vanne de commutation (18), à partir de l'évaporateur (13) à un papillon (14b) par une vanne anti-retour (15a), à partir du papillon (14b) au condenseur (12), à partir du condenseur (12) vers le côté d'entrée du compresseur (11) par la vanne de commutation (18).

12. Procédé selon la revendication 11, dans lequel un échangeur de chaleur de liquide de refroidissement interne (19) est associé au circuit de liquide de refroidissement (10), de sorte que dans l'échangeur de chaleur de liquide de refroidissement interne (19)
- en mode de chauffage normal, le flux de liquide de refroidissement (100) s'écoulant du condenseur (12) vers l'évaporateur (13) transfert de la chaleur vers le flux de liquide de refroidissement (100) s'écoulant de l'évaporateur (13) vers le compresseur (11),
- en mode de chauffage extrême, le flux de liquide de refroidissement (100) s'écoulant du condenseur (12) vers l'évaporateur (13) transfert de la chaleur vers le flux de liquide de refroidissement (100) s'écoulant de la ligne de dérivation (33) vers le compresseur (11), et
- en mode refroidissement, le flux de liquide de refroidissement (100) s'écoulant de l'évaporateur (13) vers le condenseur (12) transfert de la chaleur vers le flux de liquide de refroidissement (100) s'écoulant du condenseur (12) vers le compresseur (11).

13. Procédé selon l'une des revendications 11 ou 12, dans lequel le circuit de liquide de refroidissement (10) est associé à un récipient collecteur (17) de sorte que
- en mode de chauffage normal, le flux de liquide de refroidissement (100) s'écoulant de l'évaporateur (13) vers le compresseur (11) est temporairement stocké dans le récipient collecteur (17),
- en mode de chauffage extrême, le flux de liquide de refroidissement (100) s'écoulant de la ligne de dérivation (33) vers le compresseur (11) est temporairement stocké dans le récipient collecteur (17), et
- en mode refroidissement, le flux de liquide de refroidissement (100) s'écoulant du condenseur (12) vers le compresseur (11) est temporairement stocké dans le récipient collecteur (17).
